# EUROPEAN PATENT APPLICATION

(11) **EP 4 524 557 A1**
(43) Date of publication of application: **19.03.2025**
(21) Application number: 24764238.2
(22) Date of filing: 16.02.2024
(51) Int. Cl.: G01N 23/2202, G01N 23/2204, G01N 23/223, H01M 4/04, H01M 4/139, H01M 4/36, H01M 10/04

(54) **KIT FOR COLLECTING FOREIGN MATTER FROM ELECTRODE ACTIVE MATERIAL**

(30) Priority: 27.02.2023 KR 20230026229
(71) Applicant: LG Energy Solution, Ltd., Seoul 07335 (KR)
(72) Inventor: SON, Young Ki, Daejeon 34122 (KR); MOON, Hee Chul, Daejeon 34122 (KR)
(74) Representative: Goddar, Heinz J.
(86) International application number: PCT/KR2024/095295
(87) International publication number: WO 2024/181839

(57) **Abstract**

The present technology provides a foreign substance collection kit including: an upper kit part having a hollow body part with a first hollow channel, in which both ends of the first hollow channel are open toward an upper surface and a lower surface of the hollow body part to form a first inlet and a first outlet; a lower kit part having a hollow body part with a second hollow channel, in which both ends of the second hollow channel are open toward an upper surface and a lower surface of the hollow body part to form a second inlet and a second outlet; and a foreign substance collection filter fixed between the upper kit part and the lower kit part by combining the upper kit part and the lower kit part to concentrically arrange the first hollow channel and the second hollow channel, the foreign substance collection filter having a predetermined pore size.

## Description

### [Technical Field]

The present invention relates to a foreign substance collection kit.

More specifically, the present invention relates to a foreign substance collection kit for collecting foreign substances contained in an electrode active material.

This application claims the benefit of priority based on Korean Patent Application No. 10-2023-0026229, filed on February 27, 2023, and the entire content of the Korean patent application is incorporated herein by reference.

### [Background Art]

A secondary battery is manufactured by putting an electrode assembly in a battery case and injecting an electrolyte. The electrode assembly has a structure in which a positive electrode and a negative electrode are stacked with a separator interposed therebetween.

An electrode such as a positive or negative electrode is manufactured by coating a current collector with an active material slurry. The electrode active material may contain a small amount of foreign substances. Foreign substances in an electrode may cause a low voltage defect and the like that deteriorate the characteristics and quality of a secondary battery cell manufactured using the electrode.

Therefore, it is important to identify foreign substances that affect the characteristics of the secondary battery by detecting the components, total number, shapes, sizes, etc. of the foreign substances in the electrode active material. To this end, the foreign substances in the electrode active material should be collected and detected with a high probability. **In** addition, it is preferable to inspect a large amount of the electrode active material as quickly as possible to match a production speed of mass-production facility.

One of conventional methods of detecting foreign substances in an active material is a method of filtering electrode active material powder by applying air pressure to upper and lower sides of a metal filter. Active material powder that is smaller in size than foreign substances passes through the metal filter, and foreign substances are collected on a surface of the metal filter. Because foreign substances are dispersed in an entire area of a filter due to air pressure, a large-area filter is required to collect the foreign substances. Because foreign substances are sparsely collected in a large-area filter, collection density is increased by repeatedly attaching and detaching a tape to or from the filter several times. The tape to which foreign substances are attached may be analyzed by, for example, an XRF analyzer to identify the components of the foreign substances.

However, in this method, a large amount of foreign substances may be lost during the adhering and detaching of the tape and thus the amount or number of foreign substances in the active material cannot be accurately identified. In addition, because the metal filter is used, foreign substances may not be appropriately adsorbed on the metal filter due to magnetic properties, e.g., weak magnetic properties or paramagnetic properties, of the foreign substances. Thus, a detection rate (recovery rate) of foreign substances in the electrode active material is very low, and thus this method is very difficult to apply to detection of foreign substances.

To improve the problem, there is a method of sampling electrode active material powder containing foreign substances onto a film and analyzing the sampled electrode active material powder by an analyzer. However, in this case, the foreign substances in an electrode active material were detected together with an active material and thus it was difficult to inspect a large amount of active material. Only a small amount, e.g., about 10 mg, of samples can inspected. To inspect a large amount of active material, a sampling area should be increased greatly. However, an XRF analyzer is limited in terms of a set resolution and scan speed. Therefore, it takes a long time to scan a sample film of a large area at a set resolution and scan speed. Therefore, such a detection method is applicable only to experiments conducted at a laboratory level, and it is difficult to quickly inspect a large amount of samples to meet mass production environments of factories.

Compared to detecting foreign substances by a dry method as in the related art, foreign substances in an active material can be intensively collected in a small-area filter by preparing an electrode active material containing foreign substances as a suspension and collecting the foreign substances by passing the suspension through a filter, thereby greatly increasing a foreign substance detection rate. To detect foreign substances by a wet method, a foreign substance detection device (kit) capable of maintaining and protecting a foreign substance collection filter in a state sealed from the outside and continuously introducing a suspension into the foreign substance collection kit is required.

### [Related Art Literature]

### [Patent Document]

Korean Patent Publication No. 10-2014-0048370

### [Disclosure]

### [Technical Problem]

To address the above-described problem, the present invention is directed to providing a foreign substance collection kit capable of maintaining and protecting a foreign substance collection filter in a state sealed from the outside during detection of foreign substances by a wet method.

The present invention is directed to providing a foreign substance collection kit capable of continuously supplying a suspension to a foreign substance collection filter.

The present invention is also directed to providing a foreign substance collection kit capable of locating a foreign substance collection filter in the foreign substance collection kit, so that foreign substances may be collected in a minimum foreign substance collection region.

### [Technical Solution]

An aspect of the present invention provides a foreign substance collection kit including: an upper kit part having a hollow body part with a first hollow channel, in which both ends of the first hollow channel are open toward an upper surface and a lower surface of the hollow body part of the upper kit part to form a first inlet and a first outlet; a lower kit part having a hollow body part with a second hollow channel, in which both ends of the second hollow channel are open toward an upper surface and a lower surface of the hollow body part of the lower kit part to form a second inlet and a second outlet; and a foreign substance collection filter fixed between the upper kit part and the lower kit part by combining the upper kit part and the lower kit part to concentrically arrange the first hollow channel and the second hollow channel, the foreign substance collection filter having a predetermined pore size.

The first inlet, the first hollow channel and the first outlet, and the second inlet, the second hollow channel and the second outlet may be concentrically arranged.

For example, the first inlet, the first hollow channel and the first outlet, and the second inlet, the second hollow channel, and the second outlet may have the same diameter.

In an example embodiment, a fitting protrusion may be provided on one surface of opposite surfaces of the upper and lower kit parts, an insertion groove may be provided in the other surface of opposite surfaces of the upper and lower kit parts, and the fitting protrusion may be inserted into the insertion groove to combine the upper and lower kit parts.

In an example embodiment, screw threads, which are to be interlocked with each other, may be provided on opposite surfaces of the upper kit part and the lower kit part to screw-couple the upper and lower kit parts to each other.

A foreign substance collection region of the foreign substance collection filter may be set to an area to be scanned by X-rays within a predetermined time under a set resolution and scan speed of a foreign substance analyzer configured to analyze foreign substances by X-ray scanning.

The foreign substance collection filter may be installed concentrically between the first outlet and the second inlet to entirely cover the first outlet and the second inlet, and an area of a foreign substance collection region of the foreign substance collection filter may be the same as an area of the first outlet and the second inlet.

For example, the foreign substance collection filter may further include a filter seating sheet coupled to the foreign substance collection filter while surrounding the foreign substance collection filter, and the filter seating sheet may be fixedly installed between the upper kit part and the lower kit part.

The foreign substance collection filter may be a polymer filter.

A receiving groove may be formed in at least one of an upper surface of the lower kit part and a lower surface of the upper kit part to accommodate the foreign substance collection filter.

As another example, a receiving groove may be formed in one of an upper surface of the lower kit part and a lower surface of the upper kit part to accommodate the foreign substance collection filter, and a protrusion cover part configured to be inserted into the receiving groove to cover the foreign substance collection filter may be provided on the other one of the upper surface of the lower kit part and the lower surface of the upper kit part.

An injection tube that communicates with the first hollow channel and extends upward may be provided on an upper surface of the upper kit part.

A tapered channel part whose cross-sectional area increases toward the outlet of each of the first and second hollow channels may be provided below at least one of the first hollow channel and the second hollow channel.

In an example embodiment, a first lower surface stepped part may be provided outside a lower surface of the upper kit part, a first upper surface stepped part may be provided outside an upper surface of the lower kit part, the first upper surface stepped part having a shape to be interlinked with the first lower surface stepped part, and opposite vertical surfaces of the first lower surface stepped part and the first upper surface stepped part may be screw-coupled to each other.

In a concrete embodiment, a second lower surface stepped part may be provided inside the lower surface of the upper kit part, the second lower surface stepped part being connected to the first lower surface stepped part, a second upper surface stepped part may be provided inside the upper surface of the lower kit part, the second upper surface stepped part being connected to the first upper surface stepped part and having a shape to be interlinked with the second lower surface stepped part, and the foreign substance collection filter may be installed between opposite horizontal surfaces of the second upper surface stepped part and the second lower surface stepped part.

### [Advantageous Effects]

According to the present invention, a foreign substance collection filter can be maintained and protected in a kit in a state sealed from the outside when foreign substances are detected by a wet method.

According to the present invention, a suspension can be continuously introduced into a foreign substance collection filter and thus a large amount of electrode active material can be analyzed and inspected quickly.

In addition, according to the present invention, a foreign substance collection filter can be located in a kit such that foreign substances can be collected in a minimum foreign material collection region. Accordingly, an electrode active material can be analyzed within a short time by taking into account a resolution or scan speed of an analyzer, thereby rapidly detecting foreign substances.

By applying a foreign substance collection kit of the present invention to a wet detection method, foreign substances in an electrode active material can be detected with high probability.

### [Brief Description of the Drawings]

FIG. 1 is a schematic view of a foreign substance detecting device for detecting foreign substances in an electrode active material by a wet method using a foreign substance collection kit of the present invention.
FIGS. 2 and 3 are a schematic view and a cross-sectional view of a foreign substance collection kit according to a first embodiment of the present invention.
FIG. 4 is a schematic view of an area of a foreign substance collection region of a foreign substance collection filter according to the present invention.
FIG. 5 is a schematic view of a state in which the foreign substance collection filter is attached to a film to be inspected.
FIGS. 6 and 7 are a schematic view and a cross-sectional view of a foreign substance collection kit according to a second embodiment of the present invention.
FIG. 8 is a graph showing a correlation between the amount of foreign substance powder and the number of foreign substances.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when an element or part is referred to as being "connected" to another element or part, the element or part is connected directly or indirectly to the other element or part.

As used herein, terms such as "on" or "below", "front" or "back", or "dispose" or "arrange" are not intended to limit the invention and should be interpreted as providing examples of terms indicating positions or orientations.

Hereinafter, the present invention will be described in detail.

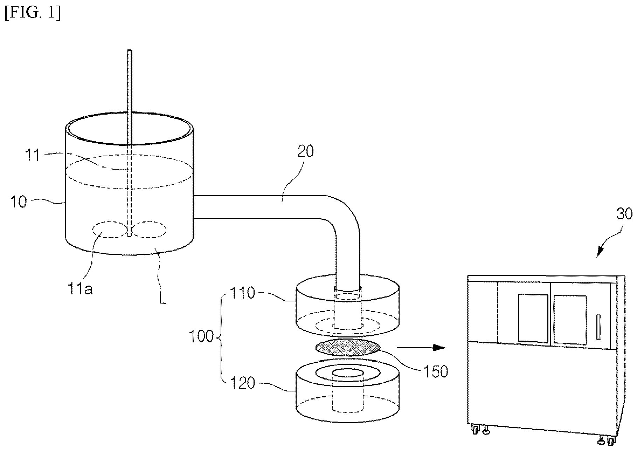

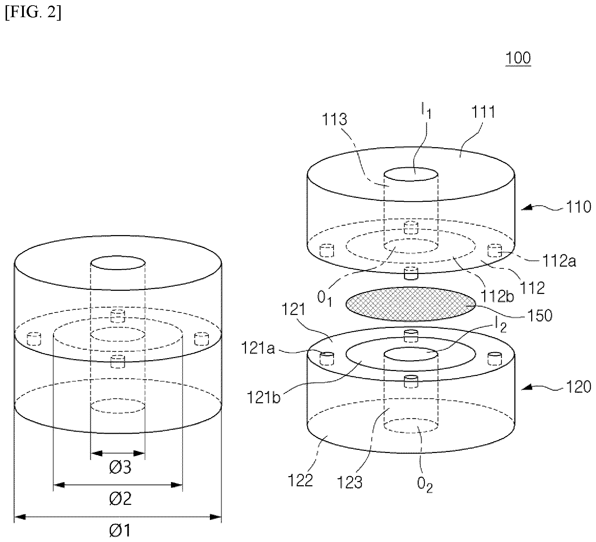

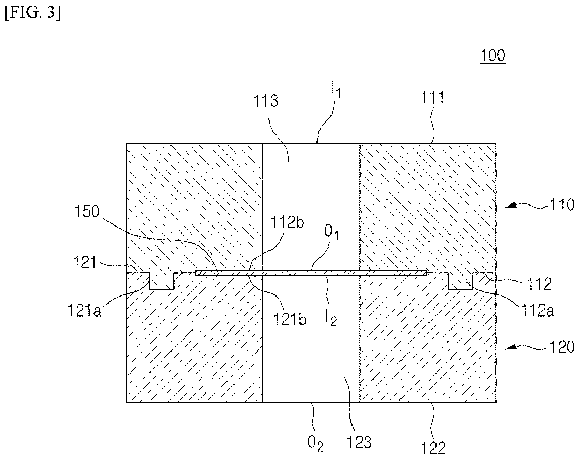

FIG. 1 is a schematic view of a foreign substance detecting device for detecting foreign substances in an electrode active material by a wet method using a foreign substance collection kit of the present invention. FIGS. 2 and 3 are a schematic view and a cross-sectional view of a foreign substance collection kit according to a first embodiment of the present invention.

The foreign substance detecting device may include a suspension tank 10 containing a suspension L in which an electrode active material is uniformly dispersed, a filter 150 having a predetermined pore size, and configured to filter the suspension L transferred from the suspension tank 10 to collect foreign substances in the electrode active material, and an analyzer 30 configured to analyze the filter 150 in which the foreign substances are collected to detect at least one of types, a total number, shapes, and sizes of the foreign substances.

The electrode active material may include a positive electrode active material and a negative electrode active material. The positive electrode active material may be a lithium-containing oxide, and the lithium-containing oxide may be a lithium-containing transition metal oxide.

For example, the lithium-containing transition metal oxide may include one selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), or a mixture of two or more of them. The lithium-containing transition metal oxide may be coated with a metal such as aluminum (Al) or a metal oxide. At least one of sulfide, selenide, and halide may be used in addition to the lithium-containing transition metal oxide.

The negative electrode active material may include a carbon material, a lithium metal, silicon, tin, or the like. When a carbon material is used as the negative electrode active material, both low-crystalline carbon and high-crystalline carbon may be used. Representative examples of low-crystalline carbon include soft carbon and hard carbon, and representative examples of high-crystalline carbon include kish graphite, pyrolytic carbon, mesophase-pitch-based carbon fiber, mesocarbon microbeads, mesophase pitches, and high-temperature calcined carbon such as petroleum- or coal-tar-pitch-derived cokes.

It is inevitable that foreign substances are mixed into the electrode active material during the preparation of an active material. There are various types of metal foreign substances as representative examples of foreign substances. For example, there are metal foreign substances such as Fe, Cu, Cr, Zn, Mn, Co, Ni, and Ti. Mn, Co, Ni, and the like may constitute an active material in the form of a compound. Free metal elements that remain after the formation of the compound may be foreign substances that are not involved in an electrical reaction. Particularly, there are a lot of such metal foreign substances in the positive electrode active material. When a secondary battery is manufactured using electrodes containing foreign substances, unexpected defects such as a low-voltage defect may occur. Foreign substances are smaller in size than materials of the electrode active material. Accordingly, the foreign substances in the active material may be collected by a filter of a pore size less than or equal to the sizes of the foreign substances. The electrode active material smaller than the foreign substances may be separated from the foreign substances while passing through the filter. The metal foreign substances may be adsorbed and collected by a magnetic member.

As described above, in the related art, foreign substances are detected by a dry method of preparing an electrode active material in the form of powder and filtering the electrode active material to detect metal foreign substance powder. However, in the related method, a foreign substance loss rate is high and thus a foreign substance detection rate is very low. In addition, it is difficult to detect foreign substances by quickly inspecting a large amount of electrode active material to meet a mass production rate of secondary batteries.

The foreign substance detecting device detects foreign substances by a so-called wet detection method of preparing the suspension L by suspending the electrode active material in a predetermined liquid and continuously passing the suspension L through the filter to collect the foreign substances.

The suspension L in which the electrode active material is uniformly dispersed is contained in the suspension tank 10. The suspension L is a mixture of suspension in which small grains do not dissolve but are spread in a liquid as in muddy water. That is, in the suspension L of the electrode active material, the active material and the foreign substances contained in the active material are spread in the liquid in an undissolved state. Accordingly, the foreign substances may be collected in the filter by passing the suspension L through a foreign substance collection filter.

FIG. 1 illustrates the suspension tank 10 that includes an agitating member 11 to agitate the electrode active material and the foreign substances to uniformly disperse them.

The suspension tank 10 is a type of container in which the electrode active material is suspended and agitated in a predetermined liquid to uniformly disperse the electrode active material. In FIG. 1, the agitating member 11 includes a rotary shaft rotated by a driving source such as a motor that is not shown, and an agitating blade 11a coupled to the rotary shaft. However, the structure and shape of the agitating member 11 are not limited thereto, and other types of agitating members capable of appropriately agitating a liquid may also be employed.

The liquid in which the electrode active material is suspended may be a liquid in which the active material and the foreign substances do not dissolve but may float in suspension in the liquid. For example, reverse osmosis (RO) water or deionized (DI) water may be used as a liquid for suspension. The RO water is pure water prepared by filtering salt from water by applying pressure by a reverse osmosis treatment device. DI water is water from which ions are removed using an ion exchange resin. That is, purified water obtained by removing impurities, such as ions, solid particles, microorganisms, and organic materials, from water may be used as a liquid for suspension.

The suspension L in which the active material and the foreign substances are uniformly dispersed may be obtained by agitation. Therefore, when a suspension in which samples are uniformly dispersed is passed through the filter, a large amount of samples can be filtered without clogging the filter. In particular, a large amount of foreign substances may be stacked and collected by the filter of a limited area by continuously transferring the suspension to the filter at a regular flow rate. According to an example embodiment, a large amount, e.g., 50 to 100 g, of electrode active material can be analyzed by the foreign substance detecting device. However, the amount of the active material is not limited thereto. Compared to the method of the related art in which only about 10 mg of sampling is possible, a large amount of active material that is hundreds to thousands of times or more 10 mg can be analyzed by the foreign substance detecting device. In addition, a large amount of active material can be inspected and analyzed quickly.

The filter 150 filters a suspension transferred from the suspension tank 10, passes small-sized active material particles, and collects only large-sized foreign substances. To this end, the filter 150 may have a pore size corresponding to the sizes of foreign substances to be collected.

The pore size may be in a range of 30 to 90 µm. More specifically, the pore size may be in a range of 30 to 90 µm, a range of 30 to 80 µm, a range of 30 to 50 µm, a range of 50 to 90 µm, a range of 60 to 90 µm, a range of 40 to 80 µm, a range of 40 to 60 µm, a range of 45 to 65 µm, or a range of 50 to 70 µm.

When the pore size exceeds an upper limit, a part of the electrode active material (e.g., a positive electrode active material) to be drained through the filter may be collected in the filter. In this case, foreign substances, which are to be detected, may be hided by the positive electrode active material collected in the filter when X-ray scanning is performed by an XRF analyzer, thus reducing a foreign substance detection rate.

When the pore size is less than a lower limit, the foreign substances, which are to be detected, are not collected in the filter but are drained, thus reducing a foreign substance detection rate.

The filter 150 may be formed of a material suitable for filtering, e.g., non-woven fabric, polymer, or stainless steel. However, it may be desirable to use a filter of a material other than a metal, because a metal filter may cause magnetic repulsion against metal foreign substances with weak or paramagnetic properties. For example, a polyethylene (PE) filter may be used as a polymer filter.

To prevent contamination of the suspension, the suspension in the suspension tank 10 may be transferred to the filter while being sealed from the outside. In addition, in order to prevent contamination from the outside in a filtering process, the filter should be installed in an environment sealed from the outside.

To this end, the foreign substance detecting device may include an airtight conduit 20 and a foreign substance collection kit 100.

Referring to FIG. 1, the airtight conduit 20 is connected between the suspension tank 10 and the foreign substance collection kit 100. For a sealing purpose, a sealing member (e.g., an O-ring) may be installed at a connection part between the airtight conduit 20 and the suspension tank 10 and a connection part between the airtight conduit 20 and the foreign substance collection ki00. By preventing leakage of the suspension using the airtight conduit 20, a required amount of the suspension may be transferred to the foreign substance collection kit 100. In addition, it is possible to prevent the mixing of unnecessary bubbles that interfere with the collection of foreign substances by preventing the inflow of external air through the airtight conduit 20. A pump may be employed to transfer a suspension at a regular flow rate from the suspension tank 10 to the filter.

The airtight conduit 20 may be formed of a flexible material. For example, the airtight conduit 20 may be a tube or hose formed of flexible plastic resin (e.g., urethane resin) or silicone resin. By bending a flexible hose, a transfer path of the suspension between the suspension tank 10 and the filter 150 may be freely set.

The foreign substance collection kit 100 of the present invention is a type of filter fixture configured to protect the filter from external influences and fix the filter at a predetermined position to collect foreign substances in a specific region of the filter.

A foreign substance collection kit of the present invention will be described in detail below.

### (First Embodiment)

The foreign substance collection kit 100 according to the present invention includes a liquid inlet, a liquid outlet, and a distribution channel connecting the liquid inlet and the liquid outlet. The foreign substance collection kit 100 is configured to be sealed from the outside except for the liquid inlet and the liquid outlet. Therefore, the filter 150 may collect foreign substances stably in the foreign substance collection kit 100 while being protected from external environments. The filter is installed in the distribution channel.

The liquid inlet1 of the foreign substance collection kit 100 and the suspension tank 10 are connected by the airtight conduit 20. As described above, a sealing member such as an O-ring may be installed at a connection part between the liquid inlet and the airtight conduit 20.

Referring to FIGS. 2 and 3, the foreign substance collection kit 100 of the first embodiment includes: an upper kit part 110 that includes a hollow body with a first hollow channel 113, both ends of which are respectively open toward an upper surface 111 and a lower surface 112 of the hollow body to form a first inlet I1 and a first outlet O1; and a lower kit part 120 that includes a hollow body with a second hollow channel 123, both ends of which are respectively open toward an upper surface 121 and a lower surface 122 of the hollow body to form a second inlet I2 and a second outlet O2. The first inlet I1 and the second outlet O2 correspond to the liquid inlet and the liquid outlet of the foreign substance collection kit 100, respectively. In addition, the first and second hollow channels are distribution channels of the foreign substance collection kit 100.

The foreign substance collection filter 150 may be fixed between the upper kit part 110 and the lower kit part 120 by combining the upper and lower kit parts 110 and 120 such that the first hollow channel 113 and the second hollow channel 123 are concentrically disposed.

The first inlet I1, the first hollow channel 113 and the first outlet O1, and the second inlet I2, the second hollow channel 123 and the second outlet O2 are disposed concentrically. The airtight conduit 20 is connected to the first inlet I1 which is the liquid inlet. Therefore, the suspension introduced into the airtight conduit 20 is transferred to the filter 150 through the first inlet I1, the first hollow channel 113, and the first outlet O1. A liquid (mainly containing an electrode active material) filtered by the filter 150 is discharged downward through the second inlet I2, the second hollow channel 123 and the second outlet O2. As described above, the foreign substance collection kit 100 is configured to pass the suspension from top to bottom, so that the suspension can be smoothly filtered due to gravity. Diameters and lengths of the first and second hollow channels 113 and 123 may be appropriately determined in consideration of a flow rate and velocity of the suspension. For example, a total length of the distribution channel, including the first and second hollow channels 113 and 123, may be determined to be in a range of 45 to 70 mm but is not limited thereto. Accordingly, a total height of the foreign substance collection kit 100, including the upper kit part 110 and the lower kit part 120, may be also determined to be in a range of 45 to 70 mm but is not limited thereto.

Diameters ϕ3 of the first inlet I1, the first hollow channel 113 and the first outlet O1, and diameters ϕ3 of the second inlet I2, the second hollow channel 123 and the second outlet O2 may be the same. However, as described below, the diameters of the first and second hollow channels 113 and 123 may vary in a height direction.

FIG. 2 illustrates a diameter ϕ1 of the foreign substance collection kit 100, diameters ϕ2 of a filter installed in the foreign substance collection kit 100 and a filter seating groove, and diameters ϕ3 of the first and second hollow channels 113 and 123 and the foreign substance collection region.

In an example embodiment, the upper kit part 110 and the lower kit part 120 may be coupled by fitting or screwing. For example, a fitting protrusion 112a may be provided on one of opposite surfaces of the upper kit part 110 and the lower kit part 120, an insertion groove 121a may be provided in the other surface, and the upper and lower kit parts 110 and 120 may be coupled to each other by inserting the fitting protrusion 112a into the insertion groove 121a (see FIGS. 2 and 3). Alternatively, screw threads A1 and A2 that are to be interlocked with each other may be provided on the opposite surfaces of the upper kit part 110 and the lower kit part 120, and the upper and lower kit parts 110 and 120 may be screw-coupled to each other (see a second embodiment to be described below). Here, the opposite surfaces of the upper kit part 110 and the lower kit part 120 may be horizontal surfaces. Alternatively, as shown in the second embodiment, when there is a step on the opposite surfaces of the upper kit part 110 and the lower kit part 120, the opposite surfaces may be vertical surfaces that are part of stepped surfaces. Therefore, the upper and lower kit parts 110 and 120 may be screw-coupled to each other by providing screw threads, which are meshed with each other, on opposite vertical surfaces of the upper kit part 110 and the lower kit part 120. Because the upper and lower kit parts 110 and 120 are coupled and the filter 150 is exposed only in a suspension permeation region (the first and second hollow channels), foreign substances are collected only in the suspension permeation region. In addition, the upper and lower kit parts 110 and 120 are firmly coupled by screws or the like, thereby preventing foreign substances from diffusing outside a permeation region of the filter 150.

The filter 150 may be concentrically installed between the first outlet O1 and the second inlet I2 to entirely cover the first outlet O1 and the second inlet I2. In this case, an area of a foreign substance collection region 151 of the filter 150 is the same as an area of the first outlet O1 and the second inlet I2.

A receiving groove for accommodation of the filter 150 may be provided in at least one of the upper surface 121 of the lower kit part 120 and the lower surface 112 of the upper kit part 110. For example, a filter receiving groove 121b may be provided only in the upper surface 121 of the lower kit part 120, and the lower surface 112 of the upper kit part 110 opposite to the upper surface 121 may be a flat surface that merely covers the filter 150. Conversely, the filter receiving groove 112b may be provided only in the lower surface 112 of the upper kit part 110, and the upper surface 121 of the lower kit part 120 opposite to the lower surface 112 may be a flat surface that merely covers the filter 150. Alternatively, as shown in FIG. 3, filter receiving grooves 112b and 121b for accommodation of the filter 150 may be provided in both the lower surface 112 of the upper kit part 110 and the upper surface 121 of the lower kit part 120. Due to such a receiving groove, the filter 150 may be stably placed between the upper and lower kit parts 110 and 120 and be fixed in the receiving groove without being moved when the upper and lower kit parts 110 and 120 are coupled to each other.

A material of the foreign substance collection kit 100 may be a material with high chemical resistance, wear resistance, and strength. For example, the foreign substance collection kit 100 may formed of polyether ether keton (PEEK) with high chemical resistance and strength.

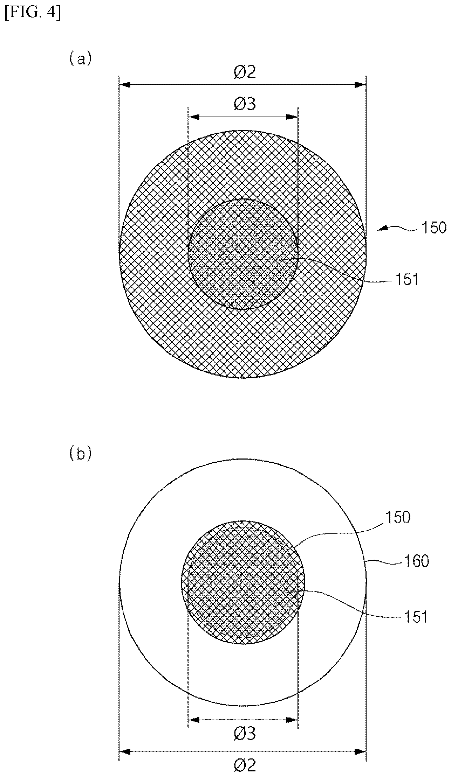

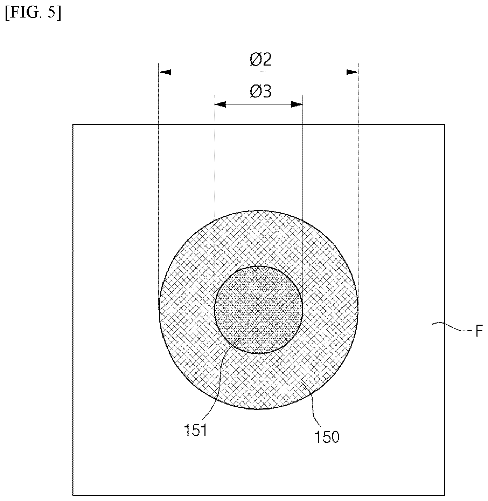

FIG. 4 is a schematic view of an area of a foreign substance collection region of a foreign substance collection filter according to the present invention. FIG. 5 is a schematic view of a state in which the foreign substance collection filter is attached to a film to be inspected.

Conventionally, a dry method of filtering active material powder containing foreign substances using air pressure is employed, and therefore, the foreign substances are spread over a wide area due to the air pressure, thus making it impossible to increase a collection density of the foreign substances. Therefore, a cumbersome task of attaching a tape multiple times to collect foreign substances is needed. In this process, a loss rate of foreign substances is very high and thus the efficiency of collecting and detecting foreign substances is very low. In addition, foreign substances are detected together with an active material and thus are difficult to detect with a narrow X-ray scan area.

In contrast, according to the present invention, foreign substances are uniformly dispersed in a suspension tank to prepare a suspension, and the suspension is continuously supplied to a filter, thus contributing to minimizing an area of a foreign substance collection region of the filter. That is, foreign substances are uniformly dispersed not to be unequally distributed in the suspension, thereby preventing the filter from being clogged during filtering. In addition, a suspension in which foreign substances are uniformly dispersed may be continuously supplied into a filter having a pore size and thus capable of filtering foreign substances, so that only the foreign substances may be intensively collected in the filter. Foreign substances may be intensively collected in a small area by collecting the foreign substances by a wet method or wet pretreatment method as described above.

Referring to FIG. 4(a), a small central circle in a large outer circle represents a boundary of a region 151 of a filter in which foreign substances are collected. It can be seen that a diameter ϕ3 of the small central circle is much smaller than a diameter ϕ2 of the large outer circle. The diameter ϕ3 of the central circle is the same as a diameter of the first outlet O1 of the upper kit part 110 and the second inlet I2 of the lower kit part 120. In an example embodiment, the diameter ϕ3 of the central circle may be approximately 1 to 2 cm. However, the diameter and area of the foreign substance collection region 151 are not limited thereto and may be increased or reduced according to a resolution and scan speed of an analyzer. As described above, foreign substances may be inspected quickly by scanning a circle with a small area by X rays even at limited scanning speeds. In addition, a large amount of active material may be quickly inspected while satisfying a set resolution. As described above, according to the present invention, filtering may be performed by only a part of a filter rather than the entire filter. A remaining part of the filter that is not used for filtering is fixed between the upper and lower kit parts 110 and 120.

According to the present invention, because the area of the foreign substance collection region 151 may be minimized, an area of the filter may be reduced to match the area of the foreign substance collection region 151. For example, as shown in FIG. 4(b), in an example embodiment, a filter seating sheet 610 coupled to a filter having a small area while surrounding the filter may be provided.

That is, the filter seating sheet 160 is coupled to the filter 150 that collects foreign substances while surrounding the filter 150. The filter seating sheet 160 may be fixedly installed between the upper kit part 110 and the lower kit part 120. The filter seating sheet 160 is a support sheet which the filter 150 is coupled to and seated on. When the filter seating sheet 160 is fixedly installed between the upper kit part 110 and the lower kit part 120, the filter 150 may be accurately located at a filtering position through which a suspension passes. In this case, a diameter of the filter 150 may be equal to or slightly greater than the diameter of the first outlet O1 of the upper kit part 110 and the second inlet I2 of the lower kit part 120.

FIG. 5 is a schematic view of a state in which a filter is attached to a film to be inspected. For inspection using a foreign substance analyzer, the filter 150 may be attached to a film F to be inspected and the film F may be analyzed by being put into the analyzer. As shown in FIG. 5, a small central circular portion of the filter 150 may be scanned instead of scanning an entire area of the filter 150, thus greatly improving an inspection speed and efficiency.

As described above, an area of the foreign substance collection region 151 of the filter 150 may be set to an area to be scanned by an X-ray within a predetermined time according to a set resolution and scan speed of a foreign substance analyzer that analyzes foreign substances by scanning by X-rays.

### (Second Embodiment)

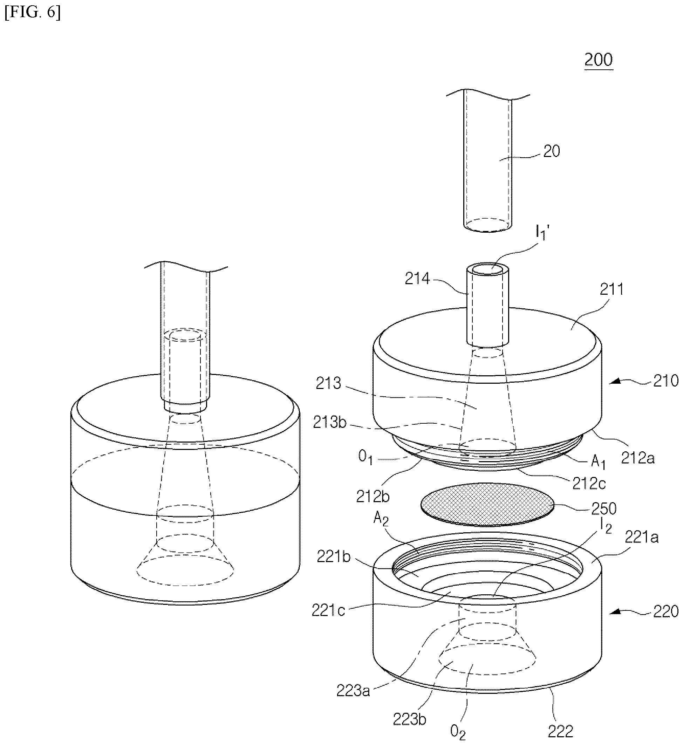

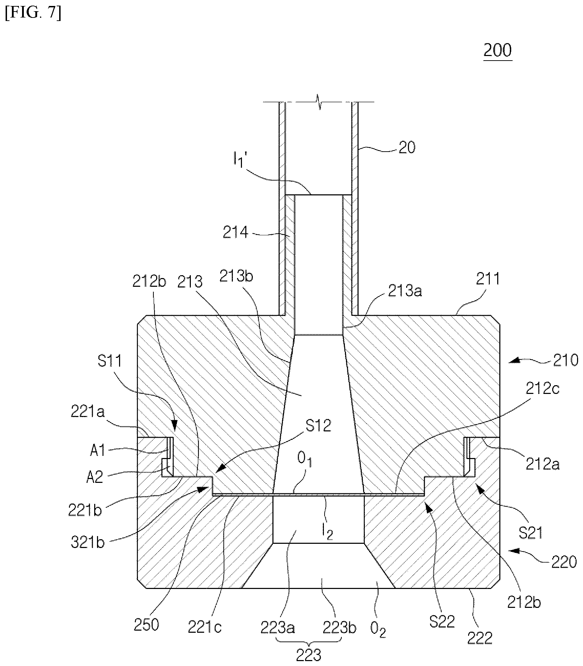

FIGS. 6 and 7 are a schematic view and a cross-sectional view of a foreign substance collection kit 200 according to a second embodiment of the present invention.

**In** the second embodiment, an injection tube 214 communicating with a first hollow channel 213 and extending upward is provided on an upper surface 211 of an upper kit part 210 of the foreign substance collection kit 200. The injection tube 214 protrudes upward and thus is easily coupled to the airtight conduit 20 described above. For example, the injection tube 214 may be tightly fitted to a urethane hose to connect the airtight conduit 20 to the foreign substance collection kit 200 while maintaining a sealed state. In addition, the injection tube 214 of a predetermined length protrudes and is inserted into the airtight conduit 20 by a predetermined length, thereby preventing a risk of leakage of a suspension. In addition, the injection tube 214 extending upward functions as a funnel, thus facilitating injection of a suspension into the foreign substance collection kit 200 through an inlet I1' of the injection tube 214.

In the examples of FIGS. 2 and 3, the diameters of the first and second hollow channels 113 and 123 are the same. However, diameters of hollow channels may be changed according to heights thereof to help the flow of the suspension and the discharge of a liquid passing through a filter. For example, in the present embodiment, a bottom of at least one of the first hollow channel 213 and a second hollow channel 223 may be provided with tapered channel parts 213b and 223b whose channel cross-sectional areas increase toward an outlet of each of the first and second hollow channels 213 and 223.

As shown in FIGS. 6 and 7, the first hollow channel 213 may include an upper channel 213a with a constant diameter and a lower channel 213b with a variable diameter. The upper channel 213a is connected to the injection tube 214 described above. A diameter of the upper channel 213a is set to be the same as an inner diameter of the injection tube 214 to ensure a stable downward flow of the suspension. Meanwhile, the lower channel 213b connected to the upper channel 213a has a tapered shape whose cross-sectional area gradually increases toward a first outlet O1. That is, the lower channel 213b is a tapered channel part 213b. Accordingly, the suspension flowing downward may be introduced into the filter more smoothly and at a higher flow rate. In this case, a second inlet I2, a second hollow channel 223, and a second outlet O2 of the lower kit part 220 may have the same diameter as shown in FIG. 3. However, in this case, a diameter of the second inlet I2 and the like may be set to be the same as a diameter of the first outlet O1 of the tapered channel part of the upper kit part 210.

As shown in FIGS. 6 and 7, the second hollow channel 223 may include an upper channel 223a with a constant diameter and a lower channel 223b with a variable diameter. The upper channel 223a is connected to the first outlet O1 of the first hollow channel 213. A diameter of the upper channel 223a is set to a constant diameter to ensure a stable downward flow of the suspension. Meanwhile, the lower channel 223b connected to the upper channel 223a has a tapered shape whose cross-sectional area gradually increases toward the second outlet O2. That is, the lower channel 223b is a tapered channel part 223b. Accordingly, the filtered suspension containing the active material can be discharged more smoothly and at a higher flow rate.

FIG. 7 illustrates a case in which both the first hollow channel 213 and the second hollow channel 223 include tapered channel parts, but only one of the first hollow channel 213 and the second hollow channel 223 may include a tapered channel part.

The foreign substance collection kit 200 of FIGS. 6 and 7 includes a plurality of stepped parts S11, S12, S21, and S22 on opposite surfaces of the upper kit part 210 and the lower kit part 220. By combining the stepped parts S11, S12, S21, and S22, the upper and lower kit parts 210 and 220 may be coupled to each other more firmly and a filter 250 may be more firmly fixed between the upper and lower kit parts 210 and 220. The upper kit part 210 includes two stepped parts on the lower surface 212 and thus a horizontal surface thereof facing the lower kit part 220 is divided into three horizontal surfaces 212a, 212b, and 212c. In addition, the lower kit part 220 includes two stepped parts on the upper surface 221 and thus a horizontal face thereof facing the upper kit part 210 is divided into three horizontal surfaces 221a, 221b, and 221c. A vertical surface is provided between adjacent horizontal surfaces among the three horizontal surfaces.

Referring to the drawings, a first lower surface stepped part S11 is provided on an outer side of the lower surface 212 of the upper kit part 210. In addition, a first upper surface stepped part S21 having a shape to be interlocked with the first lower surface stepped part S11 is provided on an outer side of the upper surface 221 of the lower kit part 220. The first lower surface stepped part S11 and the first upper surface stepped part S21 each include two horizontal surfaces and one vertical surface interposed therebetween. In this case, opposite vertical surfaces of the first lower surface stepped part S11 and the first upper surface stepped part S21 may be provided with the screw threads A1 and A2 to be interlocked with each other and thus be screw-coupled to each other. Vertical lengths of screw portions on the vertical surfaces are determined by a distance by which the upper kit part 210 is moved downward according to screw coupling. As will be described below, the upper and lower kit parts 210 and 220 are coupled to each other such that the second lower surface stepped part S12 and the second upper surface stepped part S22 are interlocked with each other. In this case, the filter 250 between the second lower surface stepped part S12 and the second upper surface stepped part S22 may be damaged, when the second lower surface stepped part S12 is brought into extremely close contact with the second upper surface stepped part S22 and thus the second upper surface stepped part S22 is pressurized. Therefore, the vertical lengths of the screw portions are preferably set to be the same as a distance by which the upper kit part 210 is moved downward and a distance by which the second lower surface stepped part S12 is moved downward when screw coupling is performed, thereby preventing the filter 250 from being pressurized excessively.

The second lower surface stepped part S12 connected to the first lower surface stepped part S11 is provided on an inside side of the lower surface 212 of the upper kit part 210. The second upper surface stepped part S22 connected to the first upper surface stepped part S21 and having a shape to be interlocked with the second lower surface stepped part S12 is provided on an inside side of the upper surface 221 of the lower kit part 220. The filter 250 is installed between opposite horizontal surfaces 212c and 221c of the second upper surface stepped part S22 and the second lower surface stepped part S12. Side surfaces of the filter 250 are regulated by the vertical surface of the second upper surface stepped part S22 to prevent movement of the filter 250. When the upper kit part 210 and the lower kit part 220 are screw-coupled to each other, the filter 250 is supported and fixed between the horizontal surfaces of the second lower surface stepped part S12 and the second upper surface stepped part S22 and by the vertical surface of the second upper surface stepped part S22. Accordingly, even when pressure is applied due to the downward flow of the suspension, the filter 250 may continuously filter foreign substances while being stably maintained.

The second upper surface stepped part S22 forms a receiving groove in which the filter 250 is accommodated. In this case, the second lower surface stepped part S12 inserted into the second upper surface stepped part S22 is inserted into the receiving groove and serves as a protruding cover covering the filter 250. When the upper and lower kit parts 210 and 220 are combined with each other, the filter 250 may be stably fixed and maintained between the receiving groove and the protruding cover.

As described above, when the filters 150 and 250 are installed in the foreign substance collection kits 100 and 200 of the present invention, filtering may be performed in an environment protected from the outside. For example, filters are placed between the upper kit parts 110 and 210 and the lower kit parts 120 and 220, and the upper kit parts 110 and 210 and the lower kit parts 120 and 220 are combined to fix the filters between the upper kit parts 110 and 210 and the lower kit parts 120 and 220. When a remaining part of a filter excluding a foreign substance collection region (or the filter seating sheet 160 of FIG. 4) is seated in a seating groove and uppper and lower kit parts are combined, foreign substances may be prevented from diffusing to the outside of the foreign substance collection region. That is, the foreign substance collection region may be limited only to an area through which a suspension penetrates.

Referring back to FIG. 1, the foreign substance detecting device includes an analyzer that analyzes a foreign substance collection filter to detect at least one of the types, numbers, and sizes of foreign substances. According to the foreign substance collection kits 100 and 200 of the present invention, a target foreign substance may be stacked and collected in a small area. Therefore, it can be expected that foreign substance detection efficiency will improve significantly regardless of the type of the analyzer.

An X-ray fluorescence (XRF) analyzer may be used as the analyzer. An XRF analysis is a method of analyzing a sample, which is to be inspected, by analyzing secondary fluorescence X-rays generated inside the sample when X-rays are emitted to the sample (or the sample is scanned by X-rays). Using the XRF analyzer, X-rays may be emitted to a filter in which foreign substances are collected to qualitatively and quantitatively analyze the foreign substances from secondary fluorescence X-rays generated according to the types of the foreign substances. Fluorescent X-rays have different wavelengths and energies for each element. Therefore, the types of the foreign substances may be identified through qualitative analysis, based on wavelengths or energy of the secondary fluorescence X-rays.

In addition, the elements of the foreign substances or the number of the foreign substances may be identified according to a result of mapping analysis obtained based on a two-dimensional (2D) image obtained by X-ray scanning. For example, a mapping map in which pixels are shaded may be obtained by scanning the foreign substance collection region by emitting X-rays thereto. The number of the foreign substances may also be identified by software with an algorithm that converts the shades in the mapping map into counts. Therefore, foreign substances in an electrode active material may be quantitatively analyzed.

Meanwhile, the shape and size of foreign substances may be identified using an optical microscope or electron microscope such as a scanning electron microscope (SEM) or a transmission electron microscope (TEM). Recently, an XRF analyzer integrated with a microscope device such as an SEM has been released. Therefore, all the types, total number, shapes, and sizes of the foreign substances may be identified by such an analyzer. It is important to increase a degree of integration in collecting foreign substances and minimize an area of a foreign substance collection region to improve foreign substance detection efficiency regardless of the type of an analyzer to be used, and the present invention is directed to achieving them.

The foreign substance collection kits 100 and 200 of the present invention may set an area of the foreign substance collection region of the filter such that X-ray scanning performed by the XRF analyzer may be completed within a predetermined time under set resolution and scan speed conditions of the XRF analyzer. That is, as shown in FIG. 4, the area of the foreign substance collection region may be set to be small, and analysis may be completed within several to several tens of minutes (e.g., several minutes to thirty minutes) when a small area is scanned with an XRF analyzer with a predetermined resolution and scan speed. Therefore, even when the above-described suspension and filtering times are included, only less than one hour is required to conduct analysis once, an electrode active material of a specific lot may be quickly inspected during a mass production process, thereby contributing to mass production.

Meanwhile, a shape of the foreign substance collection region is not limited to a circular shape as shown in FIG. 4. That is, when the shapes of the first inlet I1, the first hollow channel 113, and the first outlet O1 are changed to a rectangular shape, an elliptical shape, or other shapes, the shape of the foreign substance collection region may be changed to a rectangular shape, an elliptical shape, or other shapes.

The shapes of the second inlet I2, the second hollow channel 123, and the second outlet O2 may also be changed to a rectangular shape, an elliptical shape, or other shapes.

### [Embodiments of the Present Invention]

### <Examples>

A positive electrode active material suspension was prepared by adding 0.0034 g of a foreign substance (Cu) to 100 g of NCM-based positive electrode active material powder, suspending the resultant powder in 1 L of DI water, and agitating it in a suspension tank 10 for eight minutes. Pressure was applied to the suspension by a peristaltic pump to transfer the suspension to a PEEK foreign substance collection kit at a flow rate of 500 ml/min. After the suction of the suspension is completed, a filtrate was drained for 60 seconds through a silicone tube connected to a lower portion of the foreign substance collection kit. A polyethylene filter with a pore size shown in a table below was used. A rectangular pipe of 15 mm×15 mm was used as the first hollow channel 113, thus minimizing an area of the foreign substance collection region 151 to 15 mm×15 mm.

The foreign substance collection kit was disassembled, and the filter was analyzed by being put into an XRF FID analyzer (EA8000, manufactured by Hitachi Co., Ltd.) while being attached to a film to be inspected.

X-rays were emitted from the XRF analyzer to a scan size of 15 mm×15 mm by a mapping scanning method. A resolution was set to 30 µm/pixel, and a scanning speed was set to 5 ms.

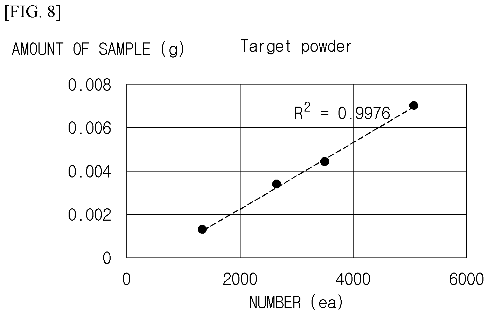

FIG. 8 is a graph showing a correlation between the amount of foreign substance powder and the number of foreign substances.

FIG. 8 illustrates a correlation between the weight and number of coppers. The correlation represents that there is a predetermined relationship between two variables, and a correlation coefficient indicating a measure of the correlation may be calculated. A statistical method of calculating a correlation coefficient from two pieces of variable data is well known and thus a detailed description thereof is omitted here.

FIG. 8 shows a correlation coefficient between the number and weight of foreign substances with respect to Cu contained in the same type of positive electrode active material as an NCM-based positive electrode active material used for XRF analysis. As shown in FIG. 8, the correlation coefficient was 0.9976 that is almost close to 1. Thus, it can be estimated that 2338 pieces of Cu powder is contained in 0.003 g of Cu.

**[Table 1]**

| Experimental Example | Positive electrode active material D50 (µm) | Positive electrode active material Dmax (µm) | Average size (µm) of foreign substance | Pore size (µm) of filter | Amount of input foreign substance (g) | Number of foreign substances measured by XRF | Number of foreign substances converted based on 0.003 g | Foreign substance detection rate (recovery rate) |
|---|---|---|---|---|---|---|---|---|
| Comparative Example 1 | 10.2 to 11.6 | 27.5 | 57 to 85 | 20 | 0.0034 | 1150 | 1015 | 43% |
| Example 1 | 10.2 to 11.6 | 27.5 | 57 to 85 | 40 | 0.0034 | 2341 | 2066 | 88% |
| Example 2 | 10.2 to 11.6 | 27.5 | 57 to 85 | 60 | 0.0034 | 2140 | 1888 | 81% |
| Example 3 | 10.2 to 11.6 | 27.5 | 57 to 85 | 80 | 0.0034 | 1590 | 1403 | 60% |
| Comparative Example 2 | 10.2 to 11.6 | 27.5 | 57 to 85 | 95 | 0.0034 | 505 | 446 | 19% |

It can be seen from Table 1 that median particle size D50 of the positive electrode active material is 10.2 to 11.6 µm, and maximum particle size thereof is 27.5 µm. An average size of foreign substances is 57 to 85 µm.

The number of foreign substances (Cu) that are collected in a filter and measured by the XRF analyzer varies according to a pore size of the filter. For comparison based on the same criterion, the numbers of coppers (Cu) measured were converted based on 0.003 g of Cu.

Referring to FIG. 8, 2338 pieces of powder are contained in 0.003 g of Cu and thus foreign substance detection rates, i.e., recovery rates of foreign substances recovered from input foreign substances, in comparative example 1, examples 1 to 3, and comparative example 2 are 43%, 88%, 81%, 60%, and 19%, respectively.

As described above, when a filter with an appropriate pore size corresponding to an average foreign substance size is selected, foreign substances can be detected with a high probability of 60% or more and preferably 80% or more.

As described above, foreign substances in an electrode active material can be detected quickly with a high probability by using a foreign substance collection kit of the present invention, thus greatly increasing detection reliability.

The above description is only an example of the technical idea of the present invention and various modification and changes may be made by those of ordinary skill in the technical field to which the present invention pertains without departing from the essential features of the present invention.

Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

### (Reference Numerals)

100: foreign substance collection kit
L: suspension
110: upper kit part
111: upper surface
112: lower surface
113: first hollow channel
120: lower kit part
121: upper surface
122: lower surface
123: second hollow channel
150: filter
151: foreign substance collection region
160: filter seating sheet
F: film to be inspected
200: foreign substance collection kit
210: upper kit part
211: upper surface
212: lower surface
213: first hollow channel
220: lower kit part
221: upper surface
222: lower surface
223: second hollow channel
250: filter

## Claims

1. A foreign substance collection kit comprising:
an upper kit part having a hollow body part with a first hollow channel, wherein both ends of the first hollow channel are open toward an upper surface and a lower surface of the hollow body part of the upper kit part to form a first inlet and a first outlet;
a lower kit part having a hollow body part with a second hollow channel, wherein both ends of the second hollow channel are open toward an upper surface and a lower surface of the hollow body part of the lower kit part to form a second inlet and a second outlet; and
a foreign substance collection filter fixed between the upper kit part and the lower kit part by combining the upper kit part and the lower kit part to concentrically arrange the first hollow channel and the second hollow channel, the foreign substance collection filter having a predetermined pore size.

2. The foreign substance collection kit of claim 1, wherein the first inlet, the first hollow channel and the first outlet, and the second inlet, the second hollow channel and the second outlet are concentrically arranged.

3. The foreign substance collection kit of claim 2, wherein the first inlet, the first hollow channel and the first outlet, and the second inlet, the second hollow channel, and the second outlet have the same diameter.

4. The foreign substance collection kit of claim 1, wherein a fitting protrusion is provided on one surface of opposite surfaces of the upper and lower kit parts, an insertion groove is provided in the other surface of opposite surfaces of the upper and lower kit parts, and the fitting protrusion is inserted into the insertion groove to combine the upper and lower kit parts.

5. The foreign substance collection kit of claim 1, wherein screw threads, which are to be interlocked with each other, are provided on opposite surfaces of the upper kit part and the lower kit part to screw-couple the upper and lower kit parts to each other.

6. The foreign substance collection kit of claim 1, wherein a foreign substance collection region of the foreign substance collection filter is set to an area to be scanned by X-rays within a predetermined time under a set resolution and scan speed of a foreign substance analyzer configured to analyze foreign substances by X-ray scanning.

7. The foreign substance collection kit of claim 6, wherein the foreign substance collection filter is installed concentrically between the first outlet and the second inlet to entirely cover the first outlet and the second inlet, and
an area of a foreign substance collection region of the foreign substance collection filter is the same as an area of the first outlet and the second inlet.

8. The foreign substance collection kit of claim 6, further comprising a filter seating sheet coupled to the foreign substance collection filter while surrounding the foreign substance collection filter,
wherein the filter seating sheet is fixedly installed between the upper kit part and the lower kit part.

9. The foreign substance collection kit of claim 1, wherein the foreign substance collection filter is a polymer filter.

10. The foreign substance collection kit of claim 1, wherein a receiving groove is formed in at least one of an upper surface of the lower kit part and a lower surface of the upper kit part to accommodate the foreign substance collection filter.

11. The foreign substance collection kit of claim 1, wherein a receiving groove is formed in one of an upper surface of the lower kit part and a lower surface of the upper kit part to accommodate the foreign substance collection filter, and
a protrusion cover part is provided on the other one of the upper surface of the lower kit part and the lower surface of the upper kit part, the protrusion cover part configured to be inserted into the receiving groove to cover the foreign substance collection filter.

12. The foreign substance collection kit of claim 1, further comprising an injection tube provided on an upper surface of the upper kit part to communicates with the first hollow channel, the injection tube extending upward.

13. The foreign substance collection kit of claim 1, further comprising a tapered channel part below at least one of the first hollow channel and the second hollow channel, wherein a cross-sectional area of the tapered channel part increases toward the outlet of each of the first and second hollow channels.

14. The foreign substance collection kit of claim 1, wherein a first lower surface stepped part is provided outside a lower surface of the upper kit part,
a first upper surface stepped part is provided outside an upper surface of the lower kit part, the first upper surface stepped part having a shape to be interlinked with the first lower surface stepped part, and
opposite vertical surfaces of the first lower surface stepped part and the first upper surface stepped part are screw-coupled to each other.

15. The foreign substance collection kit of claim 14, wherein a second lower surface stepped part is provided inside the lower surface of the upper kit part, the second lower surface stepped part being connected to the first lower surface stepped part,
a second upper surface stepped part is provided inside the upper surface of the lower kit part, the second upper surface stepped part being connected to the first upper surface stepped part and having a shape to be interlinked with the second lower surface stepped part, and
the foreign substance collection filter is installed between opposite horizontal surfaces of the second upper surface stepped part and the second lower surface stepped part.
